# EUROPÄISCHE PATENTSCHRIFT

(11) **EP 0 484 627 B1**
(45) Veröffentlichungstag und Bekanntmachung des Hinweises auf die Patenterteilung: **09.08.1995**
(21) Anmeldenummer: 91110317.4
(22) Anmeldetag: 22.06.1991
(51) Int. Cl.: B60B 33/02

(54) **Lenkrolle**
Castor
Roulette à pivot

(30) Priorität: 06.11.1990 DE 4035195
(43) Veröffentlichungstag der Anmeldung: 13.05.1992
(73) Patentinhaber: Rhombus Rollen GmbH & Co., 42929 Wermelskirchen (DE)
(72) Erfinder: Lange, Hans-Willi, Dipl.-Ing., W-5632 Wermelskirchen (DE)
(74) Vertreter: Mentzel, Norbert, Dipl.-Phys.

(56) Entgegenhaltungen:
- DE-A- 2 340 109
- DE-A- 3 837 824
- DE-B- 2 543 735
- GB-A- 2 160 415

## Beschreibung

Die Erfindung betrifft eine Lenkrolle mit einer Vorrichtung zum Feststellen einerseits der Schwenkbewegung der Radgabel für den Geradeauslauf der Lenkrolle und andererseits sowohl der Schwenkbewegung als auch der Drehbewegung des Laufrades, wobei die Feststellvorrichtung einen mit dem Schwenklager verbundenen Befestigungszapfen aufweist, in dem ein Feststellbolzen axial verschiebbar und unverdrehbar gegen die Kraft eines Rückstellfedergliedes geführt ist, und der Feststellbolzen an einer in der Radgabelhöhlung mit einem Lagerzapfen gelagerten und an das Laufrad anpreßbaren Bremsschwinge angreift, wobei der Feststellbolzen mittels eines schaltbaren Stellnockens höheneinstellbar ist.

Aus der DE 27 21 375 C2 ist eine Lenkrolle der eingangs genannten Art bekannt, bei der die Bremsschwinge auf einem die Radgabel oberhalb des Laufrades durchquerenden Lagerzapfen schwenkbar gelagert ist. Derartige Lagerzapfen ragen mit ihrem Kopf und ggf. ihrer Schraubenmuuter auf der Außenseite vor und stehen einer optisch ansprechenden Gestaltung der Lenkrolle entgegen. Außerdem ist die Bremsschwinge der Schwerkrafteinwirkung völlig überlassen, so daß dann, wenn der Feststellbolzen die Bremsschwinge freigibt, diese am Außenumfang des Laufrades unter Einwirkung ihres Gewichtes aufliegt und die Drehbewegung dieses Laufrades, wenn auch nur geringfügig, behindert.

Die aus der DE 38 37 307 C1 bekannte Lenkrolle weist eine Bremsschwinge auf, die als Blattfeder ausgebildet ist und unmittelbar am Radgabelrücken durch Verschraubung befestigt ist. Diese eigenfedernde Bremsschwinge stellt sich zwar bei ihrer Freigabe durch den Feststellbolzen selbsttätig zurück, so daß ein Schleifen der Bremsschwinge auf der Umfangsfläche des Laufrades in Freigabelage nicht erfolgt. Diese Bremsschwinge besitzt aber keinen nachstellbaren Bremsschuh, was infolge von Wechselbeanspruchungen zur Lösung bzw. zum Ausreißen der Befestigungsschrauben aus ihrem Gewindeloch führen kann.

Die außerdem bekannte Lösung gemäß der DE 25 43 735-B1 offenbart eine Lenkrolle, bei welcher der Befestigungszapfen auch von einem Feststellbolzen durchdrungen ist, der oberseitig von einer Nockenscheibe beaufschlagt ist und durch diesen aus einer Freigabelage in zwei Haltestellungen überführt werden kann. Unterseitig beaufschlagt der Feststellbolzen eine Bremsschwinge, die jedoch nicht unmittelbar an der Radgabel gehaltert ist, sondern mit einem kappenartigen Lagerbock zu einer Baueinheit zusammengefaßt ist, die ihrerseits mit der Radgabel vernietet ist. Dabei besteht die Bremsschwinge aus einem Verzahnungshebel für die Schwenkunterbrechung und einem damit gelenkig verbundenen Bremshebel. Somit ergibt sich ein beträchtlicher Bauteilaufwand.

Die Aufgabe der vorliegenden Erfindung besteht darin, eine Lenkrolle der eingangs genannten Art zu schaffen, bei welcher die vorgenannten Nachteile vermieden sind, und insbesondere die Lagerstelle der Bremsschwinge von den Außenseiten der Lenkrolle her unsichtbar ist.

Die Aufgabe ist erfindungsgemäß dadurch gelöst, daß der Lagerzapfen der Bremsschwinge in eine Lageraufnahme der Radgabel eingreift und die Lageraufnahme gegenüber den Ansichtsseiten verdeckt angeordnet ist, wobei der Lagerzapfen von einem an der Unterseite der Radgabel festlegbaren Stützglied in der Lageraufnahme gehalten ist. Dadurch ist es einerseits möglich, eine solide Lagerstelle für die Bremsschwinge selbst in aus Kunststoff hergestellten Radgabeln zu schaffen und andererseits diese Lagerstelle von den Außenseiten der Radgabel her unsichtbar anzuordnen, so daß eine ansprechende Gestaltung der gesamten Lenkrolle möglich ist. Dabei ist das Stützglied vorteilhaft aus einer Federplatte gebildet, die an Anlageflächen der Radgabel gehaltert ist, wobei die Federplatte die Lageraufnahme an ihrer offenen Seite abdeckend am Lagerzapfen mittelbar oder unmittelbar in Anlage ist.

Eine vereinfachte Lagerhaltung und Montage der Bauteile läßt sich dadurch erzielen, daß der Lagerzapfen Bestandteil der Bremsschwinge ist, die durch den Lagerzapfen in einen mit dem Feststellbolzen in Kontakt tretenden Bremsarm und einen Freischwenkarm unterteilt ist. Dabei ist zur Vermeidung des Schleifens der vom Feststellbolzen freigegebenen Bremsschwinge auf dem Außenumfang des Laufrades die Federplatte vorteilhaft mit einer Federzunge versehen, die den Freischwenkarm der Bremsschwinge im Sinne einer der Bremsbewegung entgegengesetzten Freischwenkbewegung beaufschlagt. Dabei weist die Federplatte vorteilhaft eine U-förmige Grundfläche auf und liegt mit zwei abstandsweise zueinander angeordneten Stützschenkeln am Lagerzapfen an, wobei zwischen die Stützschenkel der Freischwenkarm der Bremsschwinge faßt und der Freischwenkarm in Anlage mit der ebenfalls zwischen die Stützschenkel fassenden Federzunge der Federplatte ist.

Um zu verhindern, daß die Bremsschwinge einen über den erforderlichen Lösehub hinausgehenden Hub ausführt, und damit die Gefahr einer unbeabsichtigten Blockierung der Schwenkbewegung der Radgabel gegeben wäre, weist nach einem weiteren Ausgestaltungsmerkmal der Erfindung der Bremsarm der Bremsschwinge eine ihre Freischwenkbewegung begrenzende Anschlagnase auf.

Zur sicheren Festlegung der Federplatte an der Unterseite der Radgabel ist die gegen einen Anschlag der Radgabel stoßende Federplatte durch in Anlageflächen aufweisende Befestigungsnocken der Radgabel eindrehbare Schrauben sowie durch Führungsfinger der Radgabel übergreifende Schlitze im Innenraum der Radgabel festgelegt.

Die Erfindung ist in einem Ausführungsbeispiel auf der Zeichnung dargestellt und wird nachfolgend näher erläutert. Es zeigen:
- Fig. 1: die Lenkrolle in einer aufgebrochenen Schnittansicht analog der Schnittlinie I - I von Fig. 2,
- Fig. 2: eine Schnittansicht nach der Linie II - II von Fig. 1 in Richtung auf den Radgabelrücken von der Innenseite der Radgabel her gesehen,
- Fig. 3: die Lenkrolle in einem Querschnitt nach der Linie III - III von Fig. 1.

Die Lenkrolle umfaßt einen beispielsweise in einem rohrförmigen Fuß durch eine Schraube festgelegten Befestigungszapfen 10, an dessen Unterende beispielsweise ein Kugellager zur Bildung eines Schwenklagers 11 für die Radgabel 12 angeordnet ist. In den Seitenschenkeln 13 der Radgabel 12 ist in üblicher Weise mittels einer Schraube 14 eine Laufradachse 15 festgelegt, auf welcher über beispielsweise ein Kugellager das Laufrad 16 gelagert ist.

Im Befestigungszapfen 10 ist ein Feststellbolzen 17 axial verschiebbar, jedoch infolge seines bereichsweise unrunden Querschnitts 18 unverdrehbar angeordnet und weist an seinem in die Radgabelhöhlung einragenden Ende eine Tellerscheibe 19 auf. Diese Tellerscheibe 19 ist an ihrer Oberseite mit zwei einander diametral gegenüberliegenden Rippen 20 versehen, die zur Erzielung einer Richtungsfeststellung für den Geradeauslauf in zwei ebenfalls diametral gegenüberliegende Schlitze 22 einer im Gelenkaugenbereich unter dem Radgabelrücken festgelegten Scheibe 21 bedarfsweise eingreifen können. Die Unterseite der Tellerscheibe 19 ist mit einer Verzahnung 23 versehen, welche in das Zahnsegment 25 einer Bremsschwinge 24 im Falle der Totalfeststellung der Lenkrolle eingreifen kann.

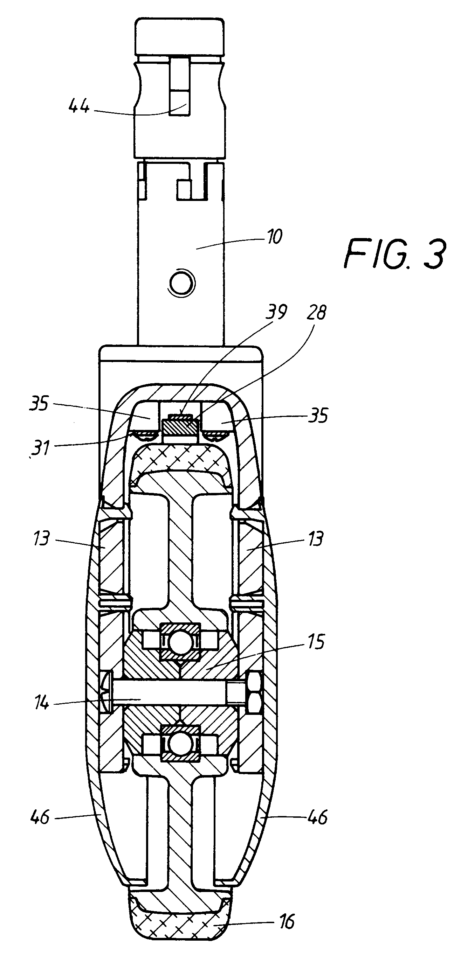

Bei dem dargestellten Ausführungsbeispiel besteht die Bremsschwinge 24 aus einem Formteil, das mit einem Lagerzapfen 26 einstückig verbunden ist, durch welchen die Bremsschwinge in einen Bremsarm 27 und einen Freischwenkarm 28 unterteilt ist. Der Lagerzapfen 26 der Bremsschwinge 24 greift in eine an der Innenseite des Gabelrückens offene Lageraufnahme 29 ein und ist in dieser durch ein an der Innenseite des Gabelrückens festgelegtes Stützglied 30 drehbeweglich gehalten. Dieses Stützglied 30 besteht bei dem dargestellten Ausführungsbeispiel aus einer Federplatte 31, die - wie insbesondere aus Fig. 2 zu entnehmen ist - eine etwa U-förmige Grundfläche aufweist. Diese Federplatte 31 weist zwei abstandsweise zueinander angeordnete Stützschenkel 32 und 32' auf, die mit ihren freien Enden den Lagerzapfen 26 übergreifen und in der Lageraufnahme 29 haltern. Die Federplatte 31 ist an der Unterseite des Gabelrückens fixiert, indem sie an einen Anschlag 33 der Radgabel 12 anstößt, sich an Anlageflächen 34 anlegt, die einerseits durch neben der Lageraufnahme 29 angeordnete Befestigungsnocken 35 und andererseits durch eine abstandsweise dazu und über die Breite der Radgabel 12 verlaufende Rippe 36 gebildet sind, wobei schließlich noch zur seitlichen Fixierung im Bereich der Rippe 36 Führungsfinger 37 angeordnet sind, die in Schlitze 38 der Federplatte 31 eingreifen. Die Schlitze 38 werden einerseits durch die Stützschenkel 32 und 32' und andererseits durch eine zwischen diese greifende Federzunge 39 gebildet. Die Halterung der Federplatte 31 an der Unterseite des Radgabelrückens erfolgt mittels in die Befestigungsnocken 35 eingedrehte Schrauben 40. Die Federzunge 39 übergreift die Oberseite des Freischwenkarmes 28 der Bremsschwinge 24 und hält diese im Uhrzeigersinne unter Vorspannung, so daß bei angehobenem Feststellbolzen 17 die Bremsschwinge 24 in eine das Laufrad freigebende Lage so weit verschwenkt, bis die am Bremsarm 27 angeordnete Anschlagnase 41 im Bereich des Gelenkauges der Radgabel an deren Unterseite anschlägt und die Freischwenkbewegung der Bremsschwinge 24 in definierter Lage begrenzt.

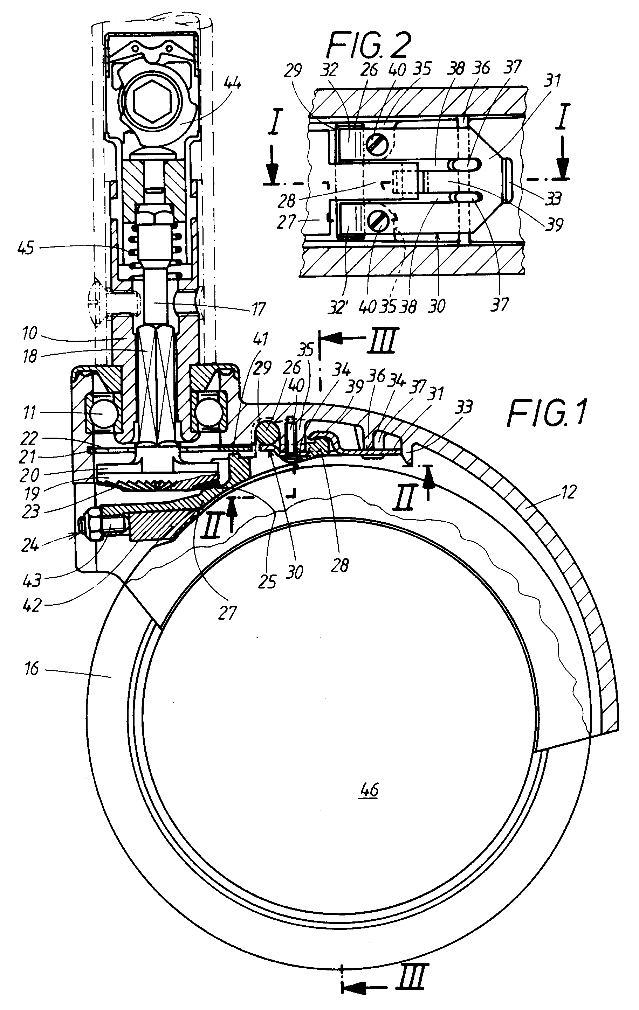

Um einerseits die am Umfang des Laufrades 16 angreifende Bremsfläche des Bremsarmes 27 einstellen und im Verschleißfall auch nachstellen zu können, ist in bekannter Weise am Bremsarm 27 in horizontal verlaufenden Schlitzen ein Bremsklotz 42 über eine Stellschraube 43 nachstellbar angeordnet. Bei dem aus den Figuren ersichtlichen Ausführungsbeispiel ist eine mechanische Schalteinrichtung zur Betätigung des Feststellbolzens 17 vorgesehen, obschon die Betätigung des Feststellbolzens 17 auch in anderer Weise, wie auf hydraulischem, pneumatischem, oder auch elektromechanischem Wege erfolgen könnte. Hier befindet sich jedoch über dem Feststellbolzen 17 ein Stellnocken 44, der drehbar in einem Fortsatz des Befestigungszapfens 10 gelagert ist. In bekannter Weise weist dieser Stellnocken 44 drei in unterschiedlicher Höhenlage angeordnete Stellflächen auf, so daß außer der in Fig. 1 dargestellten Totalblockierung,bei Anlage der mittleren Stellfläche des Stellnockens 44 eine Freigabe sowohl des Laufrades 16 als auch der Schwenkbewegung der Radgabel 12 erfolgt. Beim Zusammenwirken der dem Zentrum des Stellnockens 44 nächstliegenden Stellfläche mit dem Kopf des Feststellbolzens 17 ist der Feststellbolzen infolge der Einwirkung einer am Befestigungszapfen 10 abgestützten Rückstellfeder 45 derart nach oben geschoben, daß die Rippen 20 über der Tellerscheibe 19 in die Schlitze 22 der am Radgabelrücken festgelegten Scheibe 21 eindringen können und damit die Radgabel 12 an einer Schwenkbewegung hindern. Bei entsprechender Lage der Schlitze 22 in der Scheibe 21 ergibt sich dann ein "Geradeauslauf" der Lenkrolle.

Wie insbesondere aus Fig. 3 zu entnehmen ist, lassen sich die Seitenschenkel 13 der Radgabel 12 bereichsweise und insbesondere die Laufradachse und auch der schüsselartige Bereich des Laufrades 16 selbst durch Abdeckscheiben 46 verdecken. Diese Abdeckscheiben 46 sind beiderseits der Radgabel 12 an deren Seitenschenkeln 13 durch Aufrasten festgelegt. Dadurch läßt sich einerseits eine formschöne Gestaltung der Lenkrolle erzielen und andererseits der Achsbereich des Laufrades vor Verunreinigungen schützen.

### Bezugszeichenliste:

- 10: Befestigungszapfen
- 11: Schwenklager
- 12: Radgabel
- 13: Seitenschenkel
- 14: Schraube
- 15: Laufradachse
- 16: Laufrad
- 17: Feststellbolzen
- 18: Querschnitt, unrund
- 19: Tellerscheibe
- 20: Rippe, an 19
- 21: Scheibe
- 22: Schlitz, in 21
- 23: Verzahnung, an 19
- 24: Bremsschwinge
- 25: Zahnsegment
- 26: Lagerzapfen, an 24
- 27: Bremsarm, von 24
- 28: Freischwenkarm, von 24
- 29: Lageraufnahme, in 12
- 30: Stützglied
- 31: Federplatte
- 32: Stützschenkel, von 31
- 32': Stützschenkel, von 31
- 33: Anschlag, an 12
- 34: Anlagefläche, an 12
- 35: Befestigungsnocken, von 12
- 36: Rippe, von 12
- 37: Führungsfinger, an 12
- 38: Schlitze, in 31
- 39: Federzunge, an 31
- 40: Schraube
- 41: Anschlagnase, an 27
- 42: Bremsklotz
- 43: Stellschraube
- 44: Stellnocken
- 45: Rückstellfeder
- 46: Abdeckscheibe

## Patentansprüche

1. Lenkrolle mit einer Vorrichtung zum Feststellen einerseits der Schwenkbewegung der Radgabel (12) für den Geradeauslauf der Lenkrolle und andererseits sowohl der Schwenkbewegung als auch der Drehbewegung des Laufrades (16) wobei die Feststellvorrichtung einen mit dem Schwenklager (11) verbundenen Befestigungszapfen (10) aufweist, in dem ein Feststellbolzen (17) axial verschiebbar und unverdrehbar gegen die Kraft eines Rückstellfedergliedes (45) geführt ist, und der Feststellbolzen (17) an einer in der Radgabelhöhlung mit einem Lagerzapfen (26) gelagerten und an das Laufrad (16) anpreßbaren Bremsschwinge (24) angreift, wobei der Feststellbolzen (17) mittels eines schaltbaren Stellnockens (44) höheneinstellbar ist,
**dadurch gekennzeichnet,**
daß der Lagerzapfen (26) der Bremsschwinge (24) in eine Lageraufnahme (29) der Radgabel (12) eingreift und die Lageraufnahme (29) gegenüber den Ansichtsseiten verdeckt in der Radgabel (12) angeordnet ist, wobei der Lagerzapfen (26) von einem an der Unterseite der Radgabel (12) festlegbaren Stützglied (30) in der Lageraufnahme (29) gehalten ist.

2. Lenkrolle nach Anspruch 1, dadurch gekennzeichnet, daß das Stützglied (30) aus einer Federplatte (31) gebildet ist, die an Anlageflächen (34) der Radgabel (12) gehaltert ist, wobei die Federplatte die Lageraufnahme (29) an ihrer offenen Seite abdeckend am Lagerzapfen (26) mittelbar oder unmittelbar in Anlage ist.

3. Lenkrolle nach Anspruch 1 und/oder 2, dadurch gekennzeichnet, daß der Lagerzapfen (26) Bestandteil der Bremsschwinge (24) ist, die durch den Lagerzapfen (26) in einen mit dem Feststellbolzen (17) in Kontakt tretenden Bremsarm (27) und einen Freischwenkarm (28) unterteilt ist.

4. Lenkrolle nach einem oder mehreren der vorhergehenden Ansprüche, dadurch gekennzeichnet, daß die Federplatte (31) mit einer Federzunge (39) den Freischwenkarm (28) der Bremsschwinge im Sinne einer der Bremsbewegung entgegengesetzten Freischwenkbewegung beaufschlagt.

5. Lenkrolle nach einem oder mehreren der vorhergehenden Ansprüche, dadurch gekennzeichnet, daß die Federplatte (31) eine U-förmige Grundfläche aufweist und mit zwei abstandsweise zueinander angeordneten Stützschenkeln (32, 32') am Lagerzapfen (26) anliegt, wobei zwischen die Stützschenkel (32,32') der Freischwenkarm (28) der Bremsschwinge (24) faßt, und der Freischwenkarm (28) in Anlage mit der ebenfalls zwischen die Stützschenkel (32,32') fassenden Federzunge (39) der Federplatte ist.

6. Lenkrolle nach einem oder mehreren der vorhergehenden Ansprüche, dadurch gekennzeichnet, daß der Bremsarm (27) der Bremsschwinge (24) eine ihre Freischwenkbewegung begrenzende Anschlagnase (41) aufweist.

7. Lenkrolle nach einem oder mehreren der vorhergehenden Ansprüche, dadurch gekennzeichnet, daß die gegen einen Anschlag (33) der Radgabel (12) stoßende Federplatte (31) durch in Anschlagflächen (34) aufweisende Befestigungsnocken (35) der Radgabel (12) eindrehbare Schrauben (40) und Führungsfinger (37) der Radgabel (12) übergreifende Schlitze (38) im Innenraum der Radgabel (12) unter deren Gabelrücken an dieser festgelegt ist.

## Claims

1. Steerable roller with a device for locking on the one hand the swivelling movement of the wheel fork (12) for tracking stability of the steering roller, and on the other hand the swivelling movement as well as the rotary movement of the running wheel (16), wherein the locking device is provided with a fastening pin (10) connected to the swivel bearing (11), into which a locking bolt (17) is inserted such that it is axially displaceable and cannot be rotated by the force of a pull-back spring member (45), and the locking bolt (17) engages with a brake rocker (24) which is mounted in the cavity of the wheel fork with a bearing pin (26) and can be pressed onto the running wheel (16), wherein the locking bolt (17) can be height adjusted by means of an engaging and disengaging positioning cam (44), characterised in that the bearing pin (26) of the brake rocker (24) engages with a bearing recess (29) of the wheel fork (12) and the bearing recess (29) is arranged in the wheel fork (12) such that it is hidden from the side viewed, wherein the bearing pin (26) is held in the bearing recess (29) by a supporting member (30) which can be fixed on the underside of the wheel fork (12).

2. Steerable roller according to claim 1, characterised in that the supporting member (30) is formed from a sprung plate (31), which is retained on contact surfaces (34) of the wheel fork (12), wherein the sprung plate is directly or indirectly in contact with the bearing pin, concealing it on the open side of the bearing recess (29).

3. Steerable roller according to claim 1 and/or 2, characterised in that the bearing pin (26) is a component of the brake rocker (24), which is divided by the bearing pin (26) into a brake arm (27) which comes into contact with the locking bolt (17), and a freely pivoting arm (28).

4. Steerable roller according to one or more of the preceding claims, characterised in that the sprung plate (31) applies the freely pivoting arm (28) of the brake rocker in the sense of a freely pivoting movement, counter to the braking movement by means of a spring tongue (39).

5. Steerable roller according to one or more of the preceding claims, characterised in that the sprung plate (31) is provided with a U-shaped base, and fits onto the bearing pin (26) with two supporting arms (32, 32') arranged at a distance apart from one another, wherein the freely pivoting arm (28) of the brake rocker (24) is mounted between the supporting arms (32, 32') and the freely pivoting arm (28) is in contact with the spring tongue (39) which is also mounted between the supporting arms (32, 32').

6. Steerable roller according to one or more of the preceding claims, characterised in that the brake arm (27) of the brake rocker (24) is provided with a stop nose (41) limiting its free pivoting movement.

7. Steerable roller according to one or more of the preceding claims, characterised in that the sprung plate (31) impacting upon a stop (33) of the wheel fork (12) is fixed thereupon by means of screws (40) which can be turned in fixing cams (35) provided in contact surfaces (34) and slits (38) engaging over guide fingers (37) of the wheel fork (12) in the interior of the wheel fork (12) underneath the back of the fork thereof.

## Revendications

1. Roue orientable muni d'un dispositif pour bloquer, d'une part, le mouvement d'orientation de la fourche de roue (12) pour le roulement en ligne droite de la roue orientable et, d'autre part, aussi bien le mouvement d'orientation qu'également, le mouvement de rotation de la roue de roulement (16), le dispositif de blocage comprenant, un tourillon de fixation (10) relié au palier de pivotement (11) et à l'intérieur duquel une broche de blocage (17), non rotative mais susceptible de se déplacer axialement, est guidée à l'encontre de la force d'un élément élastique de rappel (45), la broche de blocage (17) s'appliquant contre un levier oscillant de freinage (24) pivotant au moyen d'un axe de pivotement (26) à l'intérieur de la fourche de roue et susceptible d'être pressé contre la roue de roulement (16), la broche de blocage (17) étant susceptible d'être réglée en hauteur au moyen d'une came de réglage commutable (44), caractérisée en ce que l'axe de pivotement (26) du levier oscillant de freinage (24) s'engage dans un logement de palier (29) de la fourche de roue (12) et en ce que le logement de palier (29) est disposé de façon cachée du côté opposé à la face visible de la fourche de roue (12), l'axe de pivotement (26) étant maintenu à l'intérieur du logement de palier (29) au moyen d'un organe de support (30) susceptible d'être fixé sur la face inférieure de la fourche de roue (12).

2. Roue orientable selon la revendication 1, caractérisée en ce que l'organe de support (30) est composé d'une plaque élastique (31) qui est maintenue sur des surfaces d'appui (34) de la fourche de roue (12), la plaque élastique étant en appui direct ou indirect avec l'axe de pivotement (26), en recouvrant le logement de palier (29) sur sa face ouverte.

3. Roue orientable selon la revendication 1 et/ou 2, caractérisée en ce que l'axe de pivotement (26) fait partie du levier pivotant de freinage (24) qui est divisé par l'axe de pivotement (26) en un bras de frein (27) venant en contact avec la broche de blocage (17) et en un bras oscillant librement (28).

4. Roue orientable selon une ou plusieurs des revendications précédentes, caractérisée en ce que la plaque à élastique (31) sollicite par une languette élastique (39) le bas oscillant librement (28) du levier oscillant de freinage dans la direction de déplacement du levier oscillant librement qui est opposée au déplacement de freinage.

5. Roue orientable selon une ou plusieurs des revendications précédentes, caractérisée en ce que la plaque élastique (31) présente une surface de base en forme de U, et s'appuie, au moyen de deux branches d'appui (32, 32') disposées à distance l'une de l'autre, contre l'axe de pivotement (26), le bras oscillant librement (28) du levier oscillant de freinage (24) venant s'engager entre les branches d'appui (32, 32') et le bras pivotant librement (28) étant en appui contre la languette élastique (39), également engagée entre les branches d'appui (32, 32').

6. Roue orientable selon l'une ou plusieurs des revendications précédentes, caractérisée en ce que le bras de freinage (27) du levier pivotant de freinage (24) comporte un bec de butée (41) limitant son déplacement de pivotement libre (27).

7. Roue orientable selon l'une ou plusieurs des revendications précédentes, caractérisée en ce que la plaque élastique (31) en appui contre une butée (33) de la fourche de roue (12), est fixée au moyen de vis (40) susceptibles d'être vissées dans des parties en saillie de fixation (35) présentant des surfaces de butée (34) de la fourche de roue (12) et au moyen de fentes (38) dans lesquelles s'engagent des doigts de guidage (37) de la fourche de roue (12) dans l'espace interne de la fourche de roue (12), en-dessous du dos de fourche.
